# EUROPÄISCHE PATENTSCHRIFT

(11) **EP 3 482 092 B1**
(45) Veröffentlichungstag und Bekanntmachung des Hinweises auf die Patenterteilung: **23.09.2020**
(21) Anmeldenummer: 17727568.2
(22) Anmeldetag: 30.05.2017
(51) Int. Cl.: F16B 25/10, F16B 25/00

(54) **DÜBELSCHRAUBE**
PLUG SCREW
VIS À CHEVILLE

(30) Priorität: 06.07.2016 DE 102016112357; 06.02.2017 DE 202017100612 U
(43) Veröffentlichungstag der Anmeldung: 15.05.2019
(73) Patentinhaber: SPAX International GmbH & Co. KG, 58256 Ennepetal (DE)
(72) Erfinder: LANGEWIESCHE, Frank, 45549 Sprockhövel (DE)
(74) Vertreter: Schneider, Sascha
(86) Internationale Anmeldenummer: PCT/EP2017/063042
(87) Internationale Veröffentlichungsnummer: WO 2018/007069

(56) Entgegenhaltungen:
- EP-A1- 0 102 605
- EP-A1- 0 824 198
- EP-A2- 1 591 675
- WO-A1-2012/044259
- JP-A- 2007 292 193
- US-A- 1 369 156
- US-A- 3 045 523

## Beschreibung

Die vorliegende Erfindung betrifft eine selbstfurchende Schraube, insbesondere eine Dübelschraube gemäß dem Oberbegriff der Ansprüche 1 und 2. Die Dokumente EP 1 591 675 A und EP 0 824 198 A zeigen vorbekannte Schrauben.

Selbstfurchende Schrauben werden vielseitig verwendet und zwar insbesondere zum Einschrauben in Holz- oder Kunststoffteile. Zur Verwendung in Stein oder dergleichen werden sie in Verbindung mit Kunststoffdübeln verwendet, wobei der Kunststoffdübel in ein vorgebohrtes Loch eingesetzt und anschließend die Schraube eingeschraubt wird.

Bei diesen bekannten selbstfurchenden Schrauben besteht das Problem, dass der Dübel beim Einschrauben derart beschädigt wird, dass seine Haltefunktion in dem jeweiligen Bauteil beeinträchtigt wird. Die Schwächung des Dübels wird im Wesentlichen dadurch verursacht, dass die Schraube sich in die Dübelwandung derart eingräbt, dass diese geschwächt wird. Bei Dübeln, die sowohl als Massivwand- als auch als Hohlwanddübel geeignet sind, kann durch die Spitze der bekannten Schrauben die endseitige so genannte Dübelmutter beschädigt werden.

Der vorliegenden Erfindung liegt die Aufgabe zu Grunde, eine selbstfurchende Schraube zu schaffen, die die Gefahr des Eingrabens in die Dübelwandung, insbesondere bei einem schrägen Einschrauben, vermindert und darüber hinaus auch eine Beschädigung bei Hohlwanddübeln der endseitigen Dübelmutter minimiert.

Erfindungsgemäß wird dies dadurch erreicht, dass die Flankenspitze des auf dem Schraubenschaft verlaufenden Gewindeganges abgerundet ist, wobei ein Radius der Rundung der abgerundeten Flankenspitze in der Größe von 1 % bis 10 % des Nenndurchmessers der Schraube vorhanden ist.

Durch die abgerundete Flankenspitze des Gewindeganges wird verhindert, dass sich das Gewinde derart in die Dübelwandung einschneidet, dass hierdurch eine teilweise oder vollständige Zerstörung der Wandung des Dübels auftritt.

Vorteilhafterweise beträgt der Radius der Rundung der abgerundeten Gewindegangspitze 2 % des Nenndurchmessers der Schraube.

Weiterhin umfasst eine erste Variante erfindungsgemäß die Merkmale, dass die Gewindeflanken des Gewindeganges jeweils aus zwei Flankenabschnitten gebildet sind, die miteinander einen stumpfen Winkel einschließen, wobei der am Gewindeschaft beginnende Flankenabschnitt eine radiale Höhe H1 senkrecht zur Längsachse des Schraubenschaftes und der sich hieran anschließende Flankenabschnitt eine radiale Höhe H2 senkrecht zur Längsachse des Schraubenschaftes besitzt und in der abgerundeten Flankenspitze endet, wobei die Summe aus H1 und H2 die Gewindehöhe H des Gewindeganges bildet. Durch diese erfindungsgemäße Ausgestaltung wird eine erhöhte Spreizwirkung beim Einschrauben in den jeweiligen Dübel erreicht. Vorteilhafterweise ist die radiale Höhe H1 größer/gleich 30 % und kleiner/gleich 70 % der Gesamthöhe H des Gewindeganges sowie die radiale Höhe H2 größer/gleich 30 % und kleiner/gleich 70 % der Gesamthöhe H des Gewindeganges. Optimal ist, wenn H1 = H2 ist.

Weiterhin ist es zweckmäßig, wenn die Flankenabschnitte mit der radialen Höhe H1, die sich gegenüberliegen, im Längsschnitt gesehen einen spitzen Winkel von 20° bis 40°, vorzugsweise 30° einschließen. Weiterhin ist es erfindungsgemäß von Vorteil, wenn die sich gegenüberliegenden Flankenabschnitte mit der radialen Höhe H2 miteinander einen spitzen Winkel von 50° bis 70°, vorzugsweise 50° einschließen. Die vorstehende Dimensionierung der jeweiligen Winkel, die von den Flankenabschnitten miteinander eingeschlossen werden, optimiert die Spreizwirkung der erfindungsgemäßen Schraube im Dübel, sie lässt zudem ein leichtes Eindringen der Flanken des Gewindeganges in die "Dübelmutter" zu.

Erfindungsgemäß ist es weiterhin von Vorteil, wenn die Schraubenspitze am Ende des Schraubenschaftes an ihrem freien Ende mit einer Rundung abgerundet ist. Vorteilhafterweise beträgt der Radius der Rundung 10 % des Nenndurchmessers der erfindungsgemäßen Schraube, wobei vorteilhafterweise ein Bereich von 5 % bis 20 % des Nenndurchmessers der Schraube gewählt werden kann.

Eine zweite Variante der Erfindung umfasst das Merkmal, dass die Schraubenspitze im Längsschnitt gesehen konkav verlaufende Seitenflächen aufweist. Eine derart mit einer konkaven Umrisskontur ausgebildete Schraubenspitze verbessert die Zentrierung der erfindungsgemäßen Schraube beim Einschrauben in die so genannte Dübelmutter des Hohlwanddübels und ermöglicht ein leichtes und sicheres Einschrauben.

Zudem schließen im Längsschnitt gesehen die Seitenflächen der Schraubenspitze in weise in ihrem Schnittpunkt einen spitzen Winkel W mit einer Größe in einem Bereich von 20° bis 40° ein. Zudem wird in einem sich an den Schraubenschaft anschließenden ersten Abschnitt der Schraubenspitze von seinen Seitenflächen ein Winkel W1 mit einer Größe in einem Bereich von 20° bis 40°, insbesondere mit einer Größe von 30°, eingeschlossen und in einem sich daran anschließenden zweiten Abschnitt von seinen Seitenflächen ein Winkel W2 mit einer Größe in einem Bereich von 10° bis 20°, insbesondere mit einer Größe von 15°, eingeschlossen. Dabei ist der Winkel W kleiner als der Winkel W1 und größer als der Winkel W2.

Erfindungsgemäß ist es weiterhin von Vorteil, wenn das Schraubgewinde im Bereich der Schraubenspitze und in einem angrenzenden Schaftbereich eine größere Steigung als im Übrigen Schaftbereich aufweist. Hierdurch werden ein schnelleres Verknoten und eine bessere Spreizung des Dübels bewirkt.

Weiterhin kann es vorteilhaft sein, die erfindungsgemäße Schraube als Teilgewinde-Schraube auszubilden.

Weitere vorteilhafte Ausführungsformen sind in den Unteransprüchen enthalten. Anhand des in den beiliegenden Zeichnungen dargestellten Ausführungsbeispiels wird die Erfindung näher erläutert. Es zeigen:
- Fig. 1: eine perspektivische Ansicht einer erfindungsgemäßen Schraube,
- Fig. 2: ein Längsschnitt entlang der Schnittlinie II-II in Fig. 1,
- Fig. 3: eine Einzelheit bei B in Fig. 2,
- Fig. 4: eine Einzelheit bei C in Fig. 2 und
- Fig. 5: eine perspektivische Ansicht einer erfindungsgemäßen Teilgewinde-Schraube.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Ausführungsformen beschränkt ist.

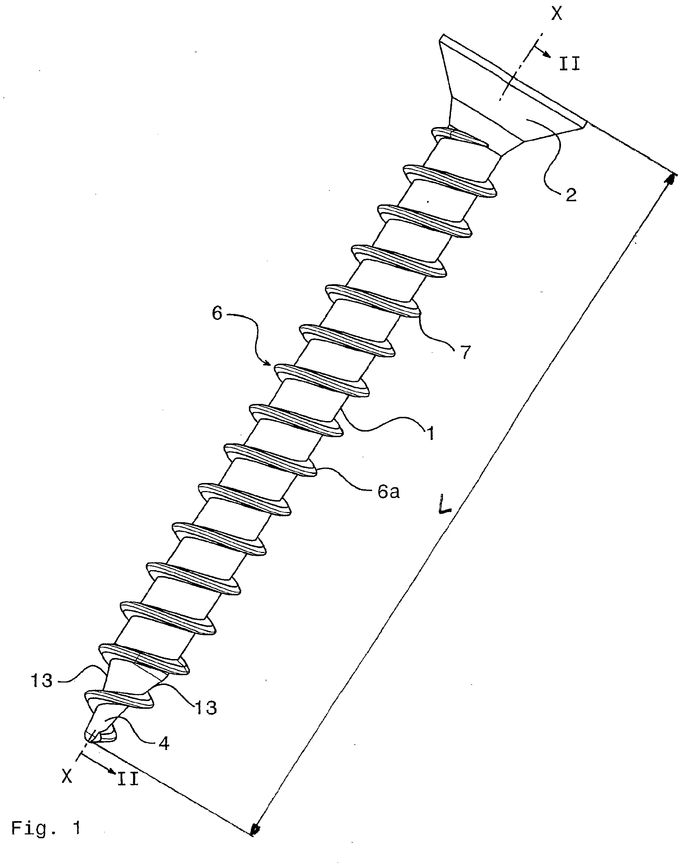

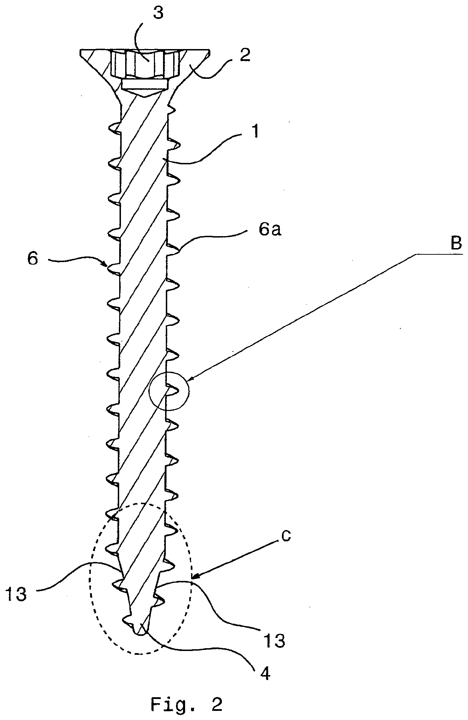

In Fig. 1 und 2 ist eine erfindungsgemäße Schraube, insbesondere aus Metall oder verstärktem Kunststoff, insbesondere Dübelschraube, dargestellt. Eine derartige Schraube weist einen Schraubenschaft 1 mit der Gesamtlänge I auf. An einem Ende des Schraubenschaftes 1 ist ein Schraubenkopf 2 mit einem Kraftangriff 3 ausgebildet, und an einem, dem Schraubenkopf 2 gegenüberliegenden Ende des Schraubenschaftes 1 ist eine zu ihrem freien Ende hin sich verjüngende Schraubenspitze 4 vorhanden. Weiterhin weist die erfindungsgemäße Schraube ein zumindest über einen Teilabschnitt des Schraubenschaftes 1 verlaufendes Schraubgewinde 6 auf, das sich bis zum freien Ende der Schraubenspitze 4 erstreckt bzw. verläuft. Dieses Schraubgewinde ist als selbstfurchendes Schraubgewinde ausgebildet. Im dargestellten Ausführungsbeispiel verläuft das Schraubgewinde 6 beginnend am Schraubenkopf 2 bis zur Schraubenspitze 4 und endet am freien Ende der Schraubenspitze 4. Im dargestellten Ausführungsbeispiel ist ein eingängiges Schraubgewinde 6 mit einem schraubenlinienförmig verlaufenden Gewindegang 6a ausgebildet. Es liegt jedoch auch im Rahmen der Erfindung, wenn ein mehrgängiges Schraubgewinde am Schraubenschaft 1 und/oder auf der Schraubenspitze 4 vorhanden ist.

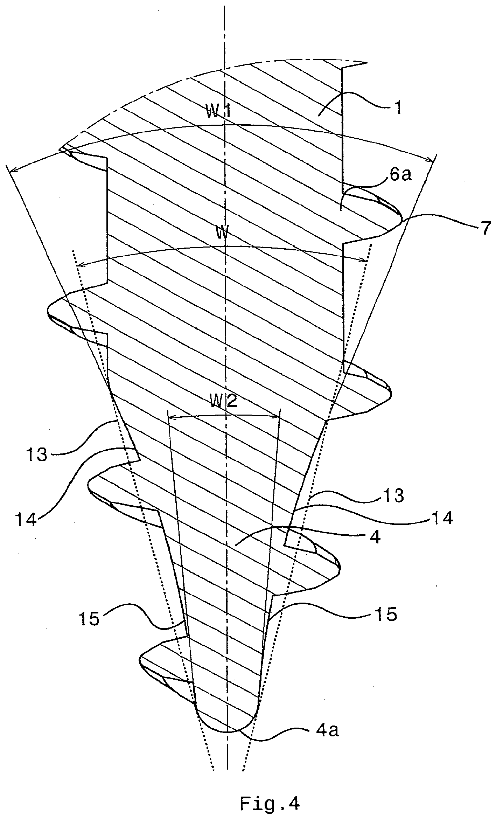

Der Gewindegang 6a des Schraubgewindes 6 ist im Längsschnitt gesehen im Querschnitt dreieckförmig mit zwei in einer Flankenspitze 7 sich schneidenden Gewindeflanken 8, 9 ausgebildet, siehe Fig. 4, wobei die Flankenspitze 7 abgerundet ist. Der Nenndurchmesser der Schraube entspricht dem Außendurchmesser des auf dem Schraubenschaft 1 befindlichen Schraubgewindes 6, und zwar im Bereich des größten Außendurchmessers des Schraubgewindes 6.

Im dargestellten Ausführungsbeispiel besitzt das Schraubgewinde 6 im Bereich des Gewindeschaftes einen durchgehend gleich großen Gewindeaußendurchmesser. Im Bereich der Schraubenspitze 4 verringert sich im dargestellten Ausführungsbeispiel der Gewindeaußendurchmesser zum freien Ende der Schraubenspitze 4 hin.

Der Radius der Rundung der abgerundeten Flankenspitze 7 beträgt 1 % bis 10 %, insbesondere 2 % des Nenndurchmessers der Schraube.

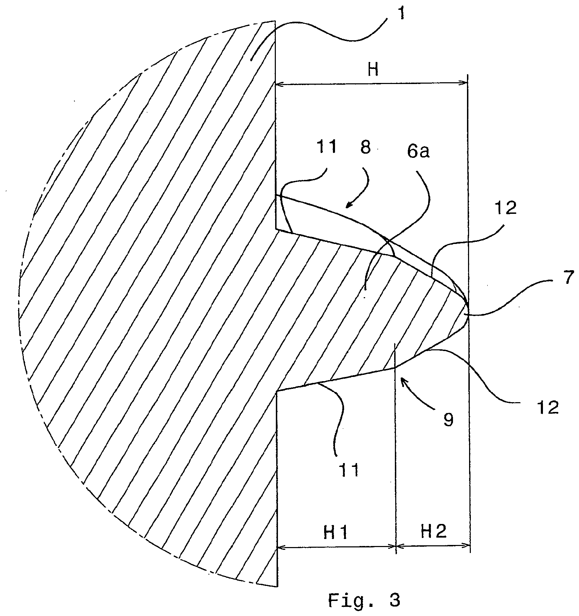

Wie zum Beispiel in Fig. 3 dargestellt ist, ist nach einer 1. Variante erfindungsgemäß das Schraubgewinde 6 derart ausgebildet, dass die Gewindeflanken 8, 9 des Gewindeganges 6a aus zwei Flankenabschnitten 11, 12 gebildet sind, die miteinander einen stumpfen Winkel einschließen, wobei der am Schraubenschaft 1 beginnende Flankenabschnitt 11 eine radiale Höhe H1 senkrecht zu einer Längsachse X-X des Schraubenschaftes 1 aufweist, und der sich daran anschließende Flankenabschnitt 12 eine radiale Höhe H2 senkrecht zur Längsachse X-X besitzt und in der abgerundeten Flankenspitze 7 endet, wobei die Summe der radialen Höhen H1 und H2 die Gewindehöhe H bildet.

Vorteilhafterweise ist die radiale Höhe H1 des Flankenabschnitts 11 größer/gleich 30 % und kleiner/gleich 70 % der Gewindehöhe H des Gewindeganges 6a, und die radiale Höhe H2 des Flankenabschnitts 12 ist größer/gleich 30 % und kleiner/gleich 70 % der Gesamthöhe H des Gewindeganges 6a. Besonders ist es von Vorteil, wenn die radiale Höhe H1 gleich der radialen Höhe H2 ist.

Weiterhin ist es von Vorteil, wie dies in Fig. 4 insbesondere zu erkennen ist, wenn die Schraubenspitze 4 an ihrem freien Ende mit einer Rundung 4a abgerundet ist. Der Radius der Rundung 4a der abgerundeten Schraubenspitze 4 beträgt insbesondere 5 % bis 20 %, vorzugsweise 10 % des Nenndurchmessers der Schraube. Durch die Rundung wird vermieden, dass sich die Spitze bei einem nicht zentrischen Einschrauben in das Material des Dübels eingräbt. Stattdessen wird die Schraubenspitze in das Loch der Dübelmutter gelenkt, insbesondere durch eine leichte Verformung des Dübels.

Weiterhin weist in einer 2. Variante die Schraubenspitze 4 im Längsschnitt gesehen konkav verlaufende Seitenflächen 13 auf, so dass die Schraubenspitze 4 eine konkave Außenkontur besitzt. Hierdurch ist der Widerstand für ein Eindrehen der Schraube in die Dübelmutter geringer.

Im Längsschnitt gesehen schließen die Seitenflächen 13 der Schraubenspitze 4 in ihrem Schnittpunkt einen spitzen Winkel W mit einer Größe in einem Bereich von 20° bis 40° ein. Die Schraubenspitze 4 ist in zwei Abschnitte 14, 15, die in Längsrichtung gesehen hintereinander liegen, ausgebildet, wobei der am freien Ende der Schraubenspitze 4 endende Abschnitt 15 Seitenflächen aufweist, die miteinander einen spitzen Winkel W2 mit einer Größe in einem Bereich von 10° bis 20°, insbesondere mit einer Größe von 15°, einschließen, und der sich daran anschließende, in Richtung des Schraubenkopfes verlaufende Abschnitt 14 mit seinen Seitenflächen einen spitzen Winkel W1 mit einer Größe in einem Bereich von 20° bis 40°, insbesondere mit einer Größe von 30°, einschließt. Der Winket W ist kleiner als der Winkel W1 und größer als der Winkel W2. Durch die Winkelbemessung wird derselbe Effekt wie durch eine Konkavität erreicht.

Erfindungsgemäß ist es vorteilhaft, wenn das Schraubgewinde 6 eine Gewindesteigung aufweist, die 35 % bis 70 %, insbesondere 60 % bis 70 % des Nenndurchmessers der Schraube beträgt. Durch die Ausbildung eines groberen Gewindes und einer Steigung größer 50 % des Nenndurchmessers, insbesondere 60 % bis 70 %, entsteht eine fühlbare Vergrößerung des Anzugmomentes, so dass der Endpunkt für die Anzugsbewegung deutlich hervortritt.

Es kann zudem von Vorteil sein, wenn die Steigung des Schraubgewindes 6 im Bereich der Schraubenspitze 4 sowie in einem an die Schraubenspitze 4 sich in Richtung auf den Schraubenkopf 2 erstreckenden Schaftbereich, der vorzugsweise 1/4 bis 1/2 der Einschraublänge des Schaftabschnittes in einem Dübel beträgt, größer ist als im übrigen Schaftbereich des Schraubenschaftes 1. Hierdurch wird ein schnelles Verknoten der Dübelmutter erreicht.

Eine erfindungsgemäße Schraube ist zweckmäßigerweise derart bemessen, dass der Nenndurchmesser 60 % bis 90 % eines Bohrungsdurchmessers einer in einem Bauteil vorhandenen Bohrung besitzt, insbesondere beträgt der Außendurchmesser des Gewindes 70 % bis 80 % des Bohrungsdurchmessers.

Insbesondere ist eine erfindungsgemäße Schraube derart bemessen, dass ihr Außendurchmesser 1 mm bis 2,5 mm kleiner ist als der Nenndurchmesser eines Dübels, mit dem die erfindungsgemäße Schraube verwendet wird. Der Nenndurchmesser des Dübels entspricht dem Bohrungsdurchmesser einer Bohrung, in die der Dübel eingesetzt wird. Hierdurch wird die Funktion des Dübels optimiert.

Der Schraubenkopf 2 einer erfindungsgemäßen Schraube kann als Senkkopf ausgebildet sein, jedoch sind auch andere Kopfformen möglich.

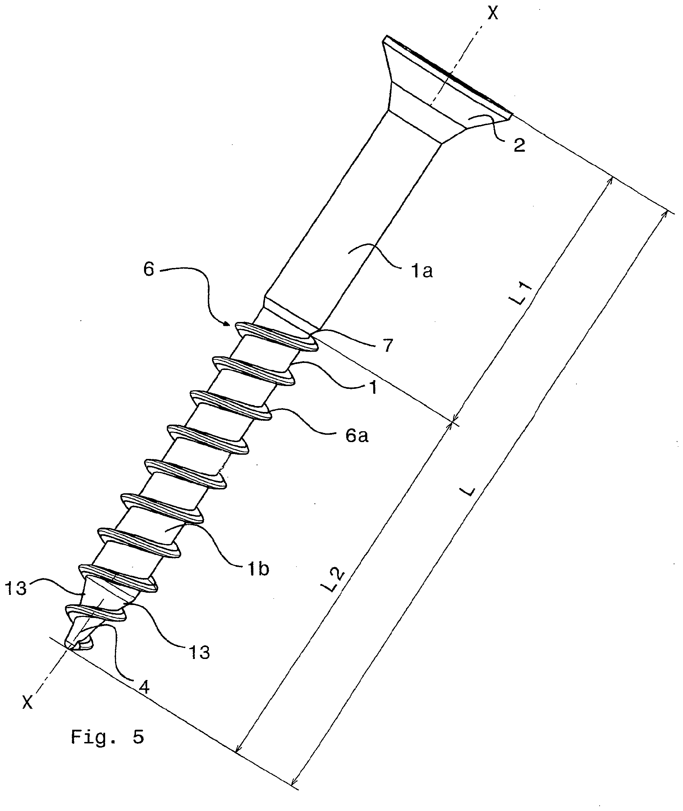

Bei einer Ausbildung der erfindungsgemäßen Schraube als Teilgewinde-Schraube ist das Verhältnis l₁/l₂ zwischen der Länge l₁ des am Schraubenkopf 2 endenden gewindefreien Abschnitts 1a des Schraubenschaftes 1 zu der Länge l₂ des das Schraubgewinde 6 aufweisenden Abschnitts 1b bis zum Beginn der Schraubenspitze 4 vorzugsweise 20/80, 50/50 oder 40/60 bezogen auf die Gesamtlänge l des Schraubenschaftes 1. Eine derartige Teilgewinde-Schraube ist in Fig. 5 dargestellt, wobei diese Teilgewinde-Schraube im Übrigen, was die Ausgestaltung betrifft, wie zu den Fig. 1 bis 4 beschrieben ausgebildet sein kann. Durch die Ausbildung des Teilgewindes wird bei einer Sacklochbohrung das Heranziehen der Dübelmutter und dadurch eine Verbesserung der Haltekräfte bewirkt.

Die Erfindung ist nicht auf die dargestellten und beschriebenen Ausführungsbeispiele beschränkt.

### Bezugszeichen

- 1: Schraubenschaft
- 1a: gewindefreier Abschnitt
- 1b: Gewindeabschnitt
- 2: Schraubenkopf
- 3: Kraftangriff
- 4: Schraubenspitze
- 4a: Rundung
- 6: Schraubgewinde
- 6a: Gewindegang
- 7: Flankenspitze
- 8, 9: Gewindeflanken
- 11,12: Flankenabschnitte
- 13: Seitenflächen
- 14: Erster Abschnitt
- 15: Zweiter Abschnitt

- l: Gesamtlänge des Schraubenschaftes
- l₁: Länge des gewindefreien Abschnitts
- l₂: Länge des Gewindeabschnitts

## Patentansprüche

1. Schraube, insbesondere Dübelschraube, aufweisend einen Schraubenschaft (1) mit einem an einem Schaltende angeordneten Schraubenkopf (2) mit einem Kraftangriff (3) und einer dem Schraubenkopf (2) gegenüberliegenden, am Ende des Schraubenschaftes (1) ausgebildeten Schraubenspitze (4), die sich zu ihrem freien Ende hin verjüngt, sowie mit einem zumindest über einen Abschnitt des Schraubenschaftes (1) und über die Schraubenspitze (4) verlaufenden Schraubgewinde (6), dessen Gewindegang (6a) einen im Längsschnitt gesehen dreieckförmigen Querschnitt besitzt, mit zwei in einer Flankenspitze (7) sich schneidenden Gewindeflanken (8, 9),
**dadurch gekennzeichnet, dass**
die Flankenspitze (7) abgerundet ist, wobei ein Radius der Rundung der abgerundeten Flankenspitze (7) in der Größe von 1 % bis 10 % des Nenndurchmessers der Schraube gewählt ist und
wobei die Gewindeflanken (8, 9) jeweils aus zwei Flankenabschnitten (11, 12) gebildet sind, die miteinander einen stumpfen Winkel einschließen,
a) wobei der am Schraubenschaft (1) beginnende Flankenabschnitt (11) eine radiale Höhe (H1) senkrecht zur Längsachse (X-X) des Schraubenschaftes (1) aufweist, und
b) der sich daran anschließende Flankenabschnitt (12) eine radiale Höhe (H2) senkrecht zur Längsachse (X-X) des Schraubenschaftes (1) besitzt, und in der abgerundeten Flankenspitze (7) endet,
wobei die Summe der radialen Höhen (H1, H2) der Gewindehöhe (H) entspricht.

2. Schraube, insbesondere Dübelschraube, aufweisend einen Schraubenschaft (1) mit einem an einem Schaftende angeordneten Schraubenkopf (2) mit einem Kraftangriff (3) und einer dem Schraubenkopf (2) gegenüberliegenden, am Ende des Schraubenschaftes (1) ausgebildeten Schraubenspitze (4), die sich zu ihrem freien Ende hin verjüngt, sowie mit einem zumindest über einen Abschnitt des Schraubenschaftes (1) und über die Schraubenspitze (4) verlaufenden Schraubgewinde (6), dessen Gewindegang (6a) einen im Längsschnitt gesehen dreieckförmigen Querschnitt besitzt, mit zwei in einer Flankenspitze (7) sich schneidenden Gewindeflanken (8, 9),
**dadurch gekennzeichnet, dass**
die Flankenspitze (7) abgerundet ist, wobei ein Radius der Rundung der abgerundeten Flankenspitze (7) in der Größe von 1 % bis 10 % des Nenndurchmessers der Schraube gewählt ist und
die Schraubenspitze (4) an ihrem freien Ende
a) im Längsschnitt gesehen konkav verlaufende Seitenflächen (13) aufweist, so dass die Schraubenspitze (4) eine konkave Umrisskontur besitzt oder
b) im Längsschnitt gesehen in einem ersten, an den Schraubenschaft (1) angrenzenden Bereich (14) seine Seitenflächen (13) in ihrem Schnittpunkt einen spitzen Winkel (W1) mit einer Größe in einem Bereich von 20° bis 40°, insbesondere mit einer Größe von 30°, einschließen, und in einem zweiten daran anschließenden, bis zum freien Ende der Schraubenspitze (4) sich erstreckenden Bereich (15) seine Seitenflächen (13) einen spitzen Winkel (W2) mit einer Größe in einem Bereich von 10° bis 20°, vorzugsweise mit einer Größe von 15°, einschließen, wobei der Winkel (W) kleiner als der Winkel (W1) ist und der Winkel (W) größer als der Winkel (W2) ist.

3. Schraube nach Anspruch 1 oder 2,
**dadurch gekennzeichnet, dass** der Radius der Rundung der abgerundeten Flankenspitze (7) 2 % des Nenndurchmessers der Schraube beträgt.

4. Schraube nach Anspruch 2,
**dadurch gekennzeichnet, dass die** Gewindeflanken (8, 9) jeweils aus zwei Flankenabschnitten (11, 12) gebildet sind, die miteinander einen stumpfen Winkel einschließen, wobei der am Schraubenschaft (1) beginnende Flankenabschnitt (11) eine radiale Höhe (H1) senkrecht zur Längsachse (X-X) des Schraubenschaftes (1) aufweist, und der sich daran anschließende Flankenabschnitt (12) eine radiale Höhe (H2) senkrecht zur Längsachse (X-X) des Schraubenschaftes (1) besitzt, und in der abgerundeten Flankenspitze (7) endet, wobei die Summe der radialen Höhen (H1, H2) der Gewindehöhe (H) entspricht.

5. Schraube nach Anspruch 1 oder 4,
**dadurch gekennzeichnet, dass** die radiale Höhe (H1) größer/gleich 30 % und kleiner/gleich 70 % der Gesamthöhe (H) beträgt, sowie die radiale Höhe (H2) größer/gleich 30 % und kleiner/gleich 70 % der radialen Gesamthöhe (H) beträgt.

6. Schraube nach Anspruch 5,
**dadurch gekennzeichnet, dass** die radiale Höhe (H1) gleich der radialen Höhe (H2) ist.

7. Schraube nach einem der Ansprüche 1 bis 6,
**dadurch gekennzeichnet, dass** die Schraubenspitze (4) an ihrem freien Ende abgerundet ist, wobei der Radius der Rundung (4a) der abgerundeten Schraubenspitze (4) 5 % bis 20 %, insbesondere 10 % des Nenndurchmessers der Schraube beträgt.

8. Schraube nach einem der Ansprüche 1 bis 7,
**dadurch gekennzeichnet, dass** die Schraubenspitze (4) an ihrem freien Ende im Schnittpunkt in ihren Seitenflächen (13) einen spitzen Winkel (W) mit einer Größe in einem Bereich von 20° bis 40° einschließt.

9. Schraube nach Anspruch 1,
**dadurch gekennzeichnet, dass** die Schraubenspitze (4) an ihrem freien Ende im Längsschnitt gesehen konkav verlaufende Seitenflächen (13) aufweist, so dass die Schraubenspitze (4) eine konkave Umrisskontur besitzt.

10. Schraube nach Anspruch 1,
**dadurch gekennzeichnet, dass** im Längsschnitt gesehen in einem ersten, an den Schraubenschaft (1) angrenzenden Bereich (14) seine Seitenflächen (13) in ihrem Schnittpunkt einen spitzen Winkel (W1) mit einer Größe in einem Bereich von 20 ° bis 40°, insbesondere mit einer Größe von 30° einschließen, und in einem zweiten daran anschließenden, bis zum freien Ende der Schraubenspitze (4) sich erstreckenden Bereich (15) seine Seitenflächen (13) einen spitzen Winkel (W2) mit einer Größe in einem Bereich von 10° bis 20°, vorzugsweise mit einer Größe von 15° einschließen, wobei insbesondere der Winkel (W) kleiner ist als der Winkel (W1) und der Winkel (W) größer als der Winkel (W2) ist.

11. Schraube nach einem der Ansprüche 1 bis 10,
**dadurch gekennzeichnet, dass** das Schraubgewinde (6) eine Steigung aufweist, die 35 % bis 70 %, insbesondere 60 % bis 70 % des Nenndurchmessers des Schraubgewindes (6) beträgt.

12. Schraube nach einem der Ansprüche 1 bis 11,
**dadurch gekennzeichnet, dass** die Steigung des Schraubgewindes (6) im Bereich der Schraubenspitze (4) sowie in einem an die Schraubenspitze (4) angrenzenden Schaftbereich, der insbesondere 1/4 bis 1/2 einer Einschraublänge des Schraubenschaftes (1) in einem Dübel beträgt, größer ist als im Übrigen Schaftbereich des Schraubenschaftes (1).

13. Schraube nach einem der Ansprüche 1 bis 12,
**dadurch gekennzeichnet, dass** die Flankenabschnitte (8, 9) im Bereich ihrer Flächenabschnitte (11) mit der radialen Höhe (H1) einen spitzen Winkel von 20° bis 40°, vorzugsweise 30° einschließen.

14. Schraube nach einem der Ansprüche 1 bis 13,
**dadurch gekennzeichnet, dass** die Flankenabschnitte (8, 9) mit ihren Flächenabschnitten (12) mit der radialen Höhe (H2) miteinander einen spitzen Winkel von 50° bis 70°, vorzugsweise 50° einschließen.

15. Schraube nach einem der Ansprüche 1 bis 14,
**dadurch gekennzeichnet, dass** der Durchmesser des Schraubgewindes (6) über die Länge der Schraubenspitze (4) sich zum freien Ende derselben verringert.

16. Schraube nach einem der Ansprüche 1 bis 15,
**dadurch gekennzeichnet dass** das Schraubgewinde (6) nur über eine an der Schraubenspitze (4) beginnende Teillänge (l₂) des Schraubenschaftes (1) ausgebildet ist und einen sich daran anschließenden gewindefreien Schaftabschnitt (1a) aufweist.

17. Schraube nach Anspruch 16,
**dadurch gekennzeichnet, dass** das Verhältnis (l₁/l₂) der Länge (l₁) des gewindefreien Schaftabschnitts (1a) zur Länge (l₂) des das Schraubgewinde (6) aufweisenden Schaftabschnitts (1b) in Bezug auf die Gesamtlänge (l) des Gewindeschaftes (1) l₁/l₂ = 20/80 oder 50/50 oder 40/60 beträgt.

18. Schraube nach einem der Ansprüche 1 bis 17,
**dadurch gekennzeichnet, dass** sie aus Metall oder verstärktem Kunststoff besteht.

19. Kombination aus einer Schraube nach einem der Ansprüche 1 bis 18 und einem Dübel,
**dadurch gekennzeichnet, dass** der Außendurchmesser des Schraubgewindes (6) im Bereich des Schraubenschaftes (1) konstant ist und 1 mm bis 2,5 mm kleiner ist als ein Nenndurchmesser des mit der Schraube zu verwendenden Dübels.

## Claims

1. Screw, in particular dowel screw, having a screw shaft (1) with a screw head (2), arranged at a shaft end, with a force application point (3) and a screw tip (4) opposite the screw head (2) and formed at the end of the screw shaft (1), which screw tip (4) tapers towards its free end, as well as with a screw thread (6) extending at least over a section of the screw shaft (1) and over the screw tip (4), the thread pitch (6a) of said screw thread having a triangular cross section viewed in longitudinal section, with two thread flanks (8, 9) intersecting in a flank tip (7),
**characterized in that**
the flank tip (7) is rounded, wherein a radius of the curve of the rounded flank tip (7) is selected in the size of 1 % to 10 % of the nominal diameter of the screw and wherein the thread flanks (8, 9) are each formed of two flank sections (11, 12), which together form an obtuse angle,
a) wherein the flank section (11) beginning at the screw shaft (1) has a radial height (H1) perpendicular to the longitudinal axis (X-X) of the screw shaft (1), and
b) the adjoining flank section (12) has a radial height (H2) perpendicular to the longitudinal axis (X-X) of the screw shaft (1), and ends in the rounded flank tip (7),
wherein the sum of the radial heights (H1, H2) corresponds to the thread height (H).

2. Screw, in particular dowel screw, having a screw shaft (1) with a screw head (2), arranged at a shaft end, with a force application point (3) and a screw tip (4) opposite the screw head (2) and formed at the end of the screw shaft (1), which screw tip tapers towards its free end, as well as with a screw thread (6) extending at least over a section of the screw shaft (1) and over the screw tip (4), the thread pitch (6a) of said screw thread (6) having a triangular cross section viewed in longitudinal section, with two thread flanks (8, 9) intersecting in a flank tip (7),
**characterized in that**
the flank tip (7) is rounded, wherein a radius of the curve of the rounded flank tip (7) is selected in the size of 1 % to 10 % of the nominal diameter of the screw and
the screw tip (4) at its free end
a) has concave side surfaces (13) viewed in longitudinal section, such that the screw tip (4) has a concave outline or
b) viewed in longitudinal section in a first section (14) adjoining the screw shaft (1) its side surfaces (13) form at their point of intersection an acute angle (W1) having a size in a range from 20° to 40°, in particular having a size of 30°, and in a second adjoining section (15) extending as far as the free end of the screw tip (4) its side surfaces (13) form an acute angle (W2) having a size in a range of 10° to 20°, preferably having a size of 15°, wherein the angle (W) is smaller than the angle (W1) and the angle (W) is larger than the angle (W2).

3. Screw according to Claim 1 or 2,
**characterized in that** the radius of the curve of the rounded flank tip (7) is 2 % of the nominal diameter of the screw.

4. Screw according to Claim 2,
**characterized in that** the thread flanks (8, 9) are each formed of two flank sections (11, 12), which together form an obtuse angle, wherein the flank section (11) beginning at the screw shaft (1) has a radial height (H1) perpendicular to the longitudinal axis (X-X) of the screw shaft (1), and the adjoining flank section (12) has a radial height (H2) perpendicular to the longitudinal axis (X-X) of the screw shaft (1), and ends in the rounded flank tip (7), wherein the sum of the radial heights (H1, H2) corresponds to the thread height (H).

5. Screw according to Claim 1 or 4,
**characterized in that** the radial height (H1) is greater than/equal to 30 % and smaller than/equal to 70 % of the overall height (H), and the radial height (H2) is greater than/equal to 30 % and smaller than/equal to 70 % of the radial overall height (H).

6. Screw according to Claim 5,
**characterized in that** the radial height (H1) is equal to the radial height (H2).

7. Screw according to one of Claims 1 to 6,
**characterized in that** the screw tip (4) is rounded at its free end, wherein the radius of the curve (4a) of the rounded screw tip (4) is 5 % to 20 %, in particular 10 % of the nominal diameter of the screw.

8. Screw according to one of Claims 1 to 7,
**characterized in that** the screw tip (4) forms an acute angle (W) having a size in a range of 20° to 40° at its free end at the point of intersection in its side surfaces (13).

9. Screw according to Claim 1,
**characterized in that** the screw tip (4) has concave side surfaces (13) at its free end viewed in longitudinal section, such that the screw tip (4) has a concave outline.

10. Screw according to Claim 1,
**characterized in that** viewed in longitudinal section in a first section (14) adjoining the screw shaft (1) its side surfaces (13) form at their point of intersection an acute angle (W1) having a size in a range from 20° to 40°, in particular having a size of 30°, and in a second adjoining section (15) extending as far as the free end of the screw tip (4) its side surfaces (13) form an acute angle (W2) having a size in a range of 10° to 20°, preferably having a size of 15°, wherein in particular
the angle (W) is smaller than the angle (W1) and the angle (W) is larger than the angle (W2).

11. Screw according to one of Claims 1 to 10,
**characterized in that** the screw thread (6) has a pitch that is 35 % to 70 %, in particular 60 % to 70 % of the nominal diameter of the screw thread (6).

12. Screw according to one of Claims 1 to 11,
**characterized in that** the pitch of the screw thread (6) in the section of the screw tip (4) and in a shaft section adjoining the screw tip (4), which shaft section is in particular 1/4 to 1/2 of the reach of the screw shaft (1) in a dowel, is greater than in the rest of the shaft section of the screw shaft (1).

13. Screw according to one of Claims 1 to 12,
**characterized in that** the flank sections (8,9) form an acute angle of 20° to 40°, preferably 30° in the region of their surface sections (11) with the radial height (H1).

14. Screw according to one of Claims 1 to 13,
**characterized in that** the flank sections (8,9) form an acute angle of 50° to 70°, preferably 50° with their surface sections (12) with the radial height (H2).

15. Screw according to one of Claims 1 to 14,
**characterized in that** the diameter of the screw thread (6) decreases over the length of the screw tip (4) to the free end thereof.

16. Screw according to one of Claims 1 to 15,
**characterized in that** the screw thread (6) is only formed over a partial length (l₂), beginning at the screw tip (4), of the screw shaft (1) and has an adjoining thread-free shaft section (1a).

17. Screw according to Claim 16,
**characterized in that** the ratio (l₁/l₂) of the length (l₁) of the thread-free shaft section (1a) to the length (l₂) of the shaft section (1b) having the screw thread (6) in relation to the overall length (1) of the threaded shaft (1) is l₁/l₂ = 20/80 or 50/50 or 40/60.

18. Screw according to one of Claims 1 to 17,
**characterized in that** it is made of metal or reinforced plastic.

19. Combination of a screw according to one of Claims 1 to 18 and a dowel,
**characterized in that** the external diameter of the screw thread (6) in the region of the screw shaft (1) is constant and is 1 mm to 2.5 mm smaller than a nominal diameter of the dowel to be used with the screw.

## Revendications

1. Vis, en particulier vis à cheville, présentant une tige de vis (1) dotée d'une tête de vis (2) disposée à une extrémité de la tige et comportant une prise de force (3) et une pointe de vis (4) opposée à la tête de vis (2) et réalisée à l'extrémité de la tige de vis (1) et qui se rétrécit en direction de son extrémité libre, de même qu'un filet (6) s'étendant au moins sur une section de la tige de vis (1) et au-dessus de la pointe de vis (4) et dont le pas de filetage (6a) possède une section transversale triangulaire, vue en section longitudinale, dotée de deux flancs filetés (8, 9) se coupant dans une pointe de flanc (7),
**caractérisée en ce que**
la pointe de flanc (7) est arrondie, un rayon de l'arrondi de la pointe de flanc arrondie (7) étant sélectionné dans un ordre de grandeur de 1 % à 10 % du diamètre nominal de la vis et
les flancs filetés (8, 9) étant constitués respectivement de deux sections de flancs (11,12) qui circonscrivent l'un avec l'autre un angle obtus,
a) la section de flanc (11) commençant au niveau de la tige de vis (1) présentant une hauteur radiale (H1) perpendiculairement à l'axe longitudinal (X-X) de la tige de vis (1), et
b) la section de flanc s'y raccordant (12) possédant une hauteur radiale (H2) perpendiculairement à l'axe longitudinal (X-X) de la tige de vis (1), et se terminant dans la pointe de flanc arrondie (7),
la somme des hauteurs radiales (H1, H2) équivalant à la hauteur du filet (H).

2. Vis, en particulier, en particulier vis à cheville, présentant une tige de vis (1) dotée d'une tête de vis (2) disposée à une extrémité de la tige et comportant une prise de force (3) et une pointe de vis (4) opposée à la tête de vis (2) et réalisée à l'extrémité de la tige de vis (1) et qui se rétrécit en direction de son extrémité libre, de même qu'un filet (6) s'étendant au moins sur une section de la tige de vis (1) et au-dessus de la pointe de vis (4) et dont le pas de filetage (6a) possède une section transversale triangulaire, vue en section longitudinale, dotée de deux flancs filetés (8, 9) se coupant dans une pointe de flanc (7),
**caractérisée en ce que**
la pointe de flanc (7) est arrondie, un rayon de l'arrondi de la pointe de flanc arrondi (7) étant sélectionné dans un ordre de grandeur de 1 % à 10 % du diamètre nominal de la vis et
la pointe de vis (4) présentant, à son extrémité libre,
a) des surfaces latérales (13) s'étendant de manière concave vues en coupe longitudinale, de sorte que la pointe de vis (4) possède un contour concave ou
b) vues en coupe longitudinale, dans une première zone (14) adjacente à la tige de vis (1), ses surfaces latérales (13) circonscrivent à leur point d'intersection un angle aigu (W1) d'un ordre de grandeur situé dans une plage de 20° à 40°, en particulier un ordre de grandeur de 30°, et, dans une seconde zone (15) s'y raccordant et s'étendant jusqu'à l'extrémité libre de la pointe de vis (4), ses surfaces latérales (13) circonscrivent un angle aigu (W2) d'un ordre de grandeur situé dans une plage de 10° à 20°, de préférence une plage de 15°, l'angle (W) étant inférieur à l'angle (W1) et l'angle (W) étant supérieur à l'angle (W2).

3. Vis selon la revendication 1 ou 2,
**caractérisée en ce que** le rayon de l'arrondi de la pointe de flanc arrondie (7) représente 2 % du diamètre nominal de la vis.

4. Vis selon la revendication 2,
**caractérisée en ce que** les flancs filetés (8, 9) sont constitués respectivement de deux sections de flancs (11,12) qui circonscrivent l'une avec l'autre un angle obtus, la section de flanc (11) commençant au niveau de la tige de vis (1) présentant une hauteur radiale (H1) perpendiculairement à l'axe longitudinal (X-X) de la tige de vis (1), et la section de flanc s'y raccordant (12) possédant une hauteur radiale (H2) perpendiculairement à l'axe longitudinal (X-X) de la tige de vis (1), et se terminant dans la pointe de flanc arrondie (7), la somme des hauteurs radiales (H1, H2) équivalant à la hauteur du filet (H).

5. Vis selon la revendication 1 ou 4,
**caractérisée en ce que** la hauteur radiale (H1) est supérieure ou égale à 30 % et inférieure ou égale à 70 % de la hauteur totale (H), et que la hauteur radiale (H2) est supérieure ou égale à 30 % et inférieurs ou égale à 70 % de la hauteur radiale totale (H).

6. Vis selon la revendication 5,
**caractérisée en ce que** la hauteur radiale (H1) est égale à la hauteur radiale (H2).

7. Vis selon une des revendications 1 à 6,
**caractérisée en ce que** la pointe de vis (4) est arrondie à son extrémité libre, le rayon de l'arrondi (4a) de la pointe de vis arrondie (4) représentant 5 % à 20 %, en particulier 10 % du diamètre nominal de la vis.

8. Vis selon une des revendications 1 à 7,
**caractérisée en ce que** la pointe de vis (4), à son extrémité libre, au point d'intersection, circonscrit dans ses surfaces latérales (13) un angle aigu (W) d'un ordre de grandeur situé dans une plage de 20° à 40°.

9. Vis selon la revendication 1,
**caractérisée en ce que** la pointe de vis (4), à son extrémité libre, vue en section longitudinale, présente des surfaces latérales (13) à extension concave, de sorte que la pointe de vis (4) possède un contour concave.

10. Vis selon la revendication 1,
**caractérisée en ce que,** vues en coupe longitudinale, dans une première zone (14) adjacente à la tige de vis (1), ses surfaces latérales (13) circonscrivent à leur point d'intersection un angle aigu (W1) d'un ordre de grandeur situé dans une plage de 20° à 40°, en particulier un ordre de grandeur de 30°, et, dans une seconde zone (15) s'y raccordant et s'étendant jusqu'à l'extrémité libre de la pointe de vis (4), ses surfaces latérales (13) circonscrivent un angle aigu (W2) d'un ordre de grandeur situé dans une plage de 10° à 20°, de préférence un ordre de grandeur de 15°, l'angle (W) étant en particulier inférieur à l'angle (W1) et l'angle (W) étant supérieur à l'angle (W2).

11. Vis selon une des revendications 1 à 10,
**caractérisée en ce que** le filet (6) présente une pente qui représente 35 % à 70 %, en particulier 60 % à 70 %, du diamètre nominal du filet (6).

12. Vis selon une des revendications 1 à 11,
**caractérisée en ce que** la pente du filet (6), au niveau de la pointe de vis (4) et dans une zone de la tige adjacente à la pointe de vis (4), qui représente en particulier 1/4 à 1/2 d'une longueur de vissage de la tige de vis (1), est supérieure à ce qu'elle est dans le reste de la zone de tige de la tige de vis (1).

13. Vis selon une des revendications 1 à 12,
**caractérisée en ce que** les sections de flancs (8, 9), au niveau de leurs sections superficielles (11), circonscrivent avec la hauteur radiale (H1) un angle aigu de 20° à 40°, de préférence 30°.

14. Vis selon une des revendications 1 à 13,
**caractérisée en ce que** les sections de flancs (8, 9), au niveau de leurs sections superficielles (12), circonscrivent entre elles avec la hauteur radiale (H2) un angle aigu de 50° à 70°, de préférence 50°.

15. Vis selon une des revendications 1 à 14,
**caractérisée en ce que** le diamètre du filet (6) se réduit sur la longueur de la pointe de vis (4) vers l'extrémité libre de celle-ci.

16. Vis selon une des revendications 1 à 15,
**caractérisée en ce que** le filet (6) est réalisé seulement sur une longueur partielle (l₂) de la tige de vis (1) commençant à la pointe de vis (4) et présente une section de tige (1a) non filetée s'y raccordant.

17. Vis selon la revendication 16,
**caractérisée en ce que** le rapport (l₁/l₂) de la longueur (l₁) de la section de tige non filetée (1a) et de la longueur (l₂) de la section de tige (1b) présentant le filet (6) par rapport à la longueur totale (1) du filet (1) s'élève à l₁/l₂ = 20/80 ou 50/50 ou 40/60.

18. Vis selon une des revendications 1 à 17,
**caractérisée en ce qu'**elle est composée de métal ou de plastique renforcé.

19. Combinaison d'une vis selon une des revendications 1 à 18 et d'une cheville,
**caractérisée en ce que** le diamètre extérieur du filet (6) est constant au niveau de la tige de vis (1) et est inférieur de 1 mm à 2,5 mm à un diamètre nominal de la cheville à utiliser avec la vis.
